(19)

Europäisches
Patentamt

European
Patent Office

Office européen
des brevets

(11)  **EP 4 206 774 A1**

(12)  **EUROPEAN PATENT APPLICATION**

(43) Date of publication:
**05.07.2023 Bulletin 2023/27**

(21) Application number: **22216293.5**

(22) Date of filing: **23.12.2022**

(51) International Patent Classification (IPC):
*G02B 6/44* *(2006.01)*

(52) Cooperative Patent Classification (CPC):
**G02B 6/4432**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.12.2021 IN 202111061170**

(71) Applicant: **Sterlite Technologies Limited Haryana 122002 (IN)**

(72) Inventors:
- **Marru, Pramod**
  **122002 Gurugram (IN)**
- **Nath, Aparna**
  **122002 Gurugram (IN)**

(74) Representative: **Petraz, Gilberto Luigi et al GLP S.r.l.**
**Viale Europa Unita, 171**
**33100 Udine (IT)**

(54)  **EMBEDDED STRENGTH MEMBER FOR OPTICAL FIBER CABLES AND MANUFACTURING METHOD THEREOF**

(57)   The present disclosure relates to a strength member (202, 302, 402) for an optical fiber cable (200, 300, 400) and the method of manufacturing thereof. The strength member comprises a plurality of reinforced yarns and one or more layers of epoxy resin over the plurality of reinforced yarns. Particularly, one or more layers of epoxy resin have a modified surface such that a strength member friction coefficient is between 0.3 to 0.5. Moreover, one or more layers of epoxy resin are blended with sand crystals and silicon dioxide powder having a concentration of 50 to 100 phr (Parts-per-Hundred-Resin).

Fig. 5

## Description

## TECHNICAL FIELD

Embodiments of the present disclosure relate to the field of optical fiber cables and more particularly, relate to an embedded strength member for optical fiber cables and the manufacturing method thereof.

This application claims the benefit of Indian Application No. 202111061170 titled "Embedded Strength Member For Optical Fiber Cables And Manufacturing Method Thereof" filed by the applicant on 28/12/2021, which is incorporated herein by reference in its entirety.

## BACKGROUND ART

Communications networks are used to convey a variety of signals such as voice, video, data and the like to subscribers. Optical fiber cables are a critical component of modern communication networks across the globe. Service providers are now routing optical fiber deeper into communication networks to increase the bandwidth available to subscribers. Optical fibers are strands of glass fiber processed so that light beams transmitted through the glass fiber are subject to total internal reflection wherein a large fraction of the incident intensity of light directed into the fiber is received at the other end of the fiber.

In recent years, communication via optical fiber cable has enjoyed a rapid rate of growth. Optical fibers provide the ability to transmit large quantities of information by light impulses and thus promise to increase in use in the future. Optical fiber cables are constructed in many configurations, all of which typically include three functional elements, a cable sheath that surrounds the optical fibers, a strength member to withstand cable tension during either placement or when permanently installed, and multiple very fine gauge optical fibers.

Strength members are one of the important components of optical fiber cables. The purpose of the strength members is to provide the optical fiber cables required tensile strength, stiffness, rigidity and bend resistance. A strength member can be installed either at a core of an optical fiber cable or embedded inside a sheath/jacket of the optical fiber cable. Strength layers and/or strength members add mechanical strength to fiber optic cables to protect the internal optical fibers against stresses applied to the cables during installation and thereafter. Example strength layers/strength members include aramid yam, steel, glass-reinforced plastic (GRP), and epoxy reinforced glass roving.

While embedding the strength member in the sheath of the optical fiber cable, if the embedded strength member is uncoated, the bonding between the embedded strength member and the sheath becomes weak, due to which the strength member may experience piston effect i.e., sliding/movement of the embedded strength member against the inner surface of the sheath. Similarly, if the embedded strength member is coated with EAA (Ethylene Acrylic Acid) or EVA (Ethylene-Vinyl Acetate), the bonding between the embedded strength member and the sheath becomes too strong such that a banana peel test may fail as stripping off the embedded strength member from the sheath becomes difficult. Further, due to poor bonding between the embedded strength member and the sheath, the optical fiber cable may fail in the water penetration test.

One way to address the aforesaid problem is enhancing roughness over the strength members by carving striations/grooves. In a grooved core cable, the glass optical fiber is typically contained in a slot or groove that is filled with a water-resistant material such as a gel. The slots or grooves are symmetrically disposed around the central strength member or core, and along the longitudinal axis of the cable to accommodate one or more glass optical fibers, a spiral groove (or SZ groove) shape. As with the loose tube construction, the outermost layer of the cable construction is typically an extruded plastic coating material. However, making striations/grooves requires additional tools.

WIPO patent application no. WO2016148895A1 titled "Optical fiber cable with adhesion control layer" discloses the use of polymer material particulate for adhesion control between strength member and sheath.

European patent application no. EP1066224B1 titled "Inorganic particle-coated glass fiber strands and products including the same" provides for the use of inorganic material coated fiber strands making reinforcing members.

Canada patent application no. CA2587364C titled "Optical fiber cable with fiber receiving jacket ducts" discloses strength member having a core of high tensile material encircled by a layer of plastic material which is different from the plastic material of the connecting portions, and which is intermediate the core and the connecting portions.

However, there are a few drawbacks in the currently similar technologies enhancing roughness over the strength members by carving striations/grooves. The conventional strength members used in optical fibers suffer from the piston effect, thereby failing in the banana peeling test and/or the water penetration test. This drawback proves to be costly in the manufacturing and handling of optical fiber. Moreover, it is costly to improve the bonding strength and adhesion of the embedded strength member with the sheath with respect to the currently similar technologies. Further, if the bonding between the strength member and the sheath is not proper, at low temperatures, the protective sheath surrounding the optical fibers contracts, exerting a compression force on the optical strands. This compression force can micro bend the optical fibers, resulting in signal loss along the length of the optical fiber.

There is an urgent need for a technical solution that overcomes the above stated limitations in the prior arts. Thus, the present disclosure focuses on optimizing the bonding strength of the embedded strength member with the sheath in a cost-effective manner.

## SUMMARY OF THE DISCLOSURE

Embodiments of the present disclosure provide a strength member for an optical fiber cable. Particularly, the strength member includes a plurality of reinforced yarns and one or more layers of epoxy resin over the plurality of reinforced yarns. Moreover, one or more layers of epoxy resin have a modified surface such that a strength member friction coefficient is between 0.3 to 0.5. Further, the strength member friction coefficient is measured between a surface of a sheath of the optical fiber cable and the modified surface of one or more layers of epoxy resin.

According to a first aspect, the plurality of reinforced yarns includes a plurality of strength yarns extended longitudinally and one or more cured coating layers of epoxy resin reinforcing the plurality of strength yarns. In particular, the plurality of strength yarns is anyone of aramid yarns, glass yarns.

According to a second aspect of the present disclosure, one or more layers of epoxy resin are blended with at least one sand crystal and silicon dioxide powder. In particular, the sand crystals have the largest dimension less than 700 microns. And, the silicon dioxide powder has the largest dimension less than 300 microns.

In accordance with an embodiment of the present disclosure, the concentration of the sand crystals or the silicon dioxide powder in one or more layers of epoxy resin is 50 to 100 phr (Parts per Hundred Resin)

According to a third aspect of the present disclosure, one or more layers of epoxy resin are cured using ultraviolet curing or thermal curing.

According to the fourth aspect of the present disclosure, a method of manufacturing a strength member for an optical fiber cable comprising steps of coating a plurality of strength yarns with one or more layers of epoxy resin and curing of one or more layers of epoxy resin. The outermost layer of one or more layers of epoxy resin has a modified surface such that a strength member friction coefficient is between 0.3 to 0.5.

According to fifth aspect of the present disclosure, the method also includes steps of measuring the strength member friction coefficient between a surface of a sheath of the optical fiber cable and the modified surface of one or more layers of epoxy resin, continuously paying off the plurality of strength yarns by a pay-off unit to a coating and curing unit, subjecting the plurality of strength yarns to wet bathing with the epoxy resin, curing the wet bathed plurality of strength yarns by the coating and curing unit, performing a second round of wet bathing using the epoxy resin and curing of the plurality of strength yarns to form a plurality of reinforced yarns, wet bathing and curing of the plurality of reinforced yarns with the blend of the epoxy resin and the powdered material, and taking up of the coated and cured strength member with the plurality of reinforced yarns by the take-up unit.

The foregoing objectives of the present disclosure are attained by employing a method of manufacturing a strength member for optical fiber cables.

## BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.

Fig. 1 is a block diagram illustrating the manufacturing of a strength member in accordance with an embodiment of the present disclosure;

Fig. 2 is a pictorial snapshot illustrating an exemplary optical fiber cable with a plurality of strength members embedded in an outer layer in accordance with one embodiment of the present disclosure;

Fig. 3 is a pictorial snapshot illustrating an exemplary optical fiber cable with a plurality of strength members embedded in an outer layer in accordance with another embodiment of the present disclosure;

Fig. 4 is a pictorial snapshot illustrating an exemplary optical fiber cable with a plurality of strength members embedded in an outer layer in accordance with yet another embodiment of the present disclosure;

Fig. 5 is a flow chart illustrating a method for manufacturing the strength member in accordance with an embodiment of the present disclosure.

## REFERENCE LIST

System - 100
Pay-off unit - 102
Coating and curing unit - 104
Take-up unit - 106
Optical fiber cable - 200, 300, 400
Plurality of strength members - 202, 302, 402
Sheath - 204, 304, 404
First layer - 206, 306, 406
One or more binders/ One or more optical fiber ribbon bundles - 208
One or more optical transmission elements - 210, 310, 410
One or more ripcords - 212, 312, 412
Fiber carrying element - 308/408
One or more buffer tubes - 308, 408

The strength member for optical cables is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

## DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of elements or steps but not the exclusion of any other element or step or group of elements or steps.

The term "including" is used to mean "including but not limited to". "Including" and "including but not limited to" are used interchangeably.

**Following terms shall apply throughout the present disclosure:**
Optical fiber refers to a medium associated with the transmission of information over long distances in the form of light pulses. The optical fiber uses light to transmit voice and data communications over long distances when encapsulated in a jacket/sheath. The optical fiber may be of ITU.T G.657.A2 category. Alternatively, the optical fiber may be of ITU.T G.657.A1 or G.657.B3 or G.652.D or other suitable categories.

ITU.T stands for International Telecommunication Union-Telecommunication Standardization Sector, is one of the three sectors of the ITU. The ITU is the United Nations specialized agency in the field of telecommunications and is responsible for studying technical, operating and tariff questions and issuing Recommendations on them with a view to standardizing telecommunications on a worldwide basis.

Curing is a process that produces toughening or hardening of a material/polymer by cross-linking of polymer chains.

Sheathing is the process of squeezing a molten sheathing material through a funnel of a die as the core runs through the centre.

Crush resistance is an ability of a cable to withstand and/or recover from the effects of a compressive force.

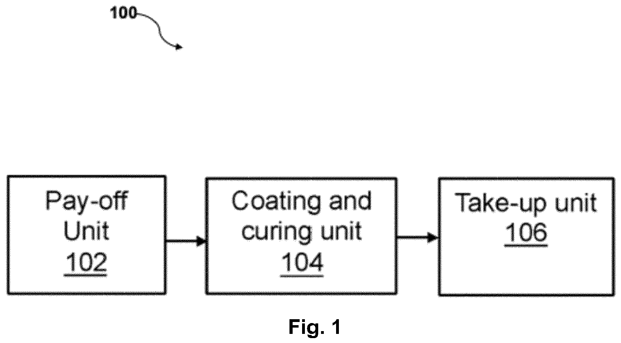

Fig. 1 is a block diagram illustrating components of a system for manufacturing a strength member in accordance with an embodiment of the present disclosure. System 100 includes a pay-off unit 102, a coating and curing unit 104 and a take-up unit 106. In particular, the pay-off unit 102 is a rotating platform, vertical axis flyer type pay-off unit, horizontal axis flyer type pay-off unit, high-speed pay-off unit. Moreover, the pay-off unit 102 continuously pay-off a plurality of strength yarns to the coating and curing unit 104. Further, the plurality of strength yarns may be but is not limited to aramid yarns, glass roving yarns (glass yarns) or any suitable yarn known to a person skilled in fiber optic art. Subsequently, the plurality of strength yarns is extended longitudinally.

In accordance with an embodiment of the present disclosure, the coating and curing unit 104 includes a suitably dimensioned die flooded with a coating material for coating/bathing the plurality of strength yarns. Moreover, the coating and curing unit 104 also include a forming and curing die for curing the coated/bathed plurality of strength yarns. Alternatively, the coating and curing unit 104 includes a resin bath for coating the strength yarns with an epoxy resin, and then passing the coated strength yarns through the forming and curing die for giving the desired shape to strength yarns is given and then curing the strength yarns.

In accordance with one embodiment of the present disclosure, the coating and curing unit 104 is a single unit. Alternatively, the coating and curing unit 104 may be separate units without limiting the scope of the present disclosure.

In accordance with an embodiment of the present disclosure, the coating material may be a blend of epoxy resin and powdered material. In particular, epoxy resins/ or polyepoxides are a class of reactive prepolymers and polymers containing epoxide groups. The epoxy resins may be reacted (cross-linked) either with themselves through a catalytic homo-polymerisation, or with other co-reactants such as, but not limited to, polyfunctional amines, acids, acid anhydrides, phenols, alcohols and thiols. The co-reactants are known as hardeners or curatives and the cross-linking reaction is known as curing.

Particularly, the strength yarns may be bathed/coated with the epoxy resin with subsequent curing by the coating and curing unit 104. Typically, the epoxy resin is cured using thermal/heat or UV (ultraviolet) curing.

In accordance with an embodiment of the present disclosure, the process of coating and curing is a repetitive process. Particularly, after the first round of coating and curing, the coating and curing unit 104 performs a second round of bathing/coating using the epoxy resin and curing of the plurality of strength yarns coated with the epoxy resin. The repetitive rounds lead to the formation of a plurality of reinforced yarns comprising the plurality of strength yarns extended longitudinally and one or more cured coating layers of the epoxy resin reinforcing the plurality of strength yarns. At last, the coating and curing unit 104 further performs the curing of the reinforced yarns followed by bathing of the reinforced yarns with a blend of the epoxy resin and the powdered material, thereby forming one or more layers of the epoxy resin as an outermost layer over the plurality of reinforced yarns.

In accordance with an embodiment of the present disclosure, bathing in the above steps maybe, but not limited to, wet bathing. And, after the first and second wet baths of the epoxy resin and curing, the powdered material may be blended with the epoxy resin in the third wet bath, thereby resulting in the strength member.

In an alternative embodiment, blending of the powdered material in the epoxy resin is done in the first wet bath, the second wet bath or any suitable combination of wet baths. Particularly, the powdered material is sand crystals and silicon dioxide (SiO2) powder. Moreover, the sand crystals may have the largest dimension less than 700 microns and the silicon dioxide powder may have the largest dimension less than 300 microns. Further, the powdered material may be blended with a phr (Parts per Hundred Resin) of 50 to 100. Thus, the concentration of the sand crystals or the SiO2 powder in one or more layers of the epoxy resin is 50 to 100 phr.

At last, the coated and cured strength member is taken up by the take-up unit 106.

In accordance with an embodiment of the present disclosure, the strength member may be made of, but not limited to, FRP (Fiber Reinforced Plastic), ARP (Aramid-Reinforced Plastic) or any other suitable dielectric/strength material.

In accordance with an embodiment of the present disclosure, the strength member may have a round shape, a flat shape or any other suitable shape.

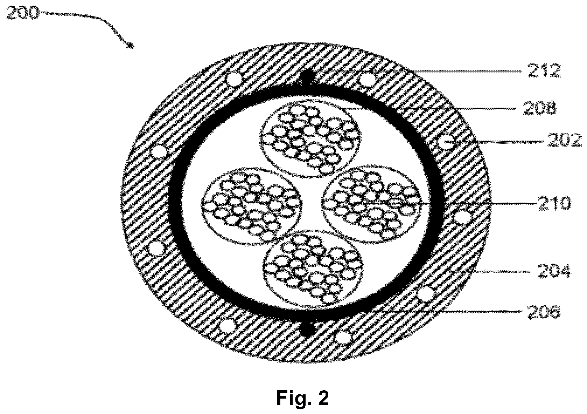

Fig. 2, Fig. 3 and Fig. 4 are pictorial snapshots illustrating exemplary optical fiber cable with a plurality of strength members embedded in an outer layer in accordance with one or more embodiments of the present disclosure. In particular, the outer layer is the sheath 204, 304, 404. Moreover, the optical fiber cable 200, 300, 400 includes one or more optical transmission elements 210, 310, 410, a first layer 206, 306, 406, a sheath 204, 304, 404, a plurality of strength members 202, 302, 402 and one or more rip cords 212, 312, 412 respectively as illustrated in Fig. 2-4.

In accordance with an embodiment of the present disclosure, one or more optical transmission elements (or optical fibers) 210, 310, 410 are, but not limited to, a group of loose optical fibers, a group of optical fiber ribbons or a stack of optical fiber ribbons, a group of rollable ribbons, a group of corrugated ribbons, a group of partially bonded optical fiber ribbons, a group of flat ribbons. Particularly, the optical fiber may be a bend-insensitive fiber with less degradation in optical properties or less increment in optical attenuation during bending of the optical fiber cable to maintain the optical properties during multiple winding/unwinding operations of the optical fiber cable.

According to various embodiments of the present disclosure, the optical fiber may be coloured fibers. Alternatively, the optical fiber may be non-coloured fibers.

According to various embodiments of the present disclosure, the optical fiber may be a single-core optical fiber, a multi-core optical fiber, a single-mode optical fiber, a multimode optical fiber or the like. In particular, the single-mode optical fiber carries only a single mode of light and the multimode optical fiber carries multiple modes of light to propagate. Alternatively, the multicore optical fibres comprise multiple cores as opposed to the single-core optical fiber that comprises only a single core.

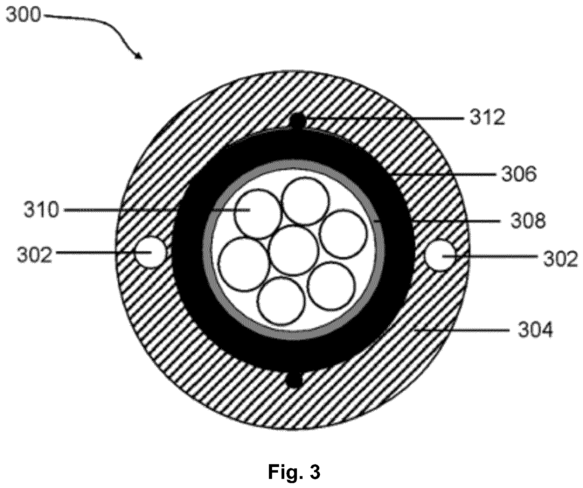

Referring to Fig. 3, the core of the optical fiber cable 300 may be a unitube/monotube core with a fiber carrying element 308. In particular, the fibre carrying element 308 has a single buffer tube or loose tube to carry one or more optical transmission elements 310.

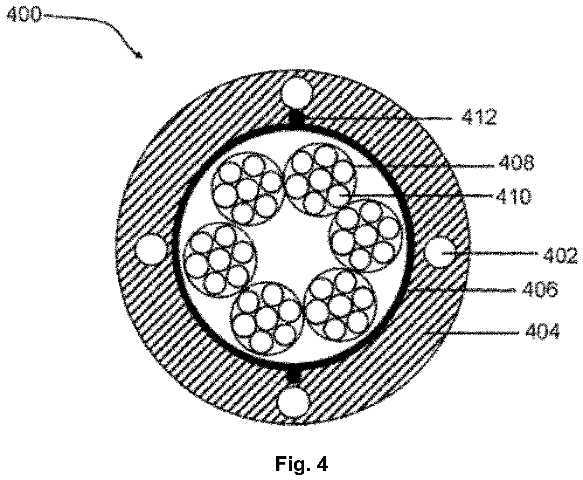

Referring to Fig. 4, the core of the optical fiber cable 400 has a multitube core in accordance with an alternative embodiment. Each of two or more fiber carrying elements 408, such as two or more buffer tubes or loose tubes, may carry one or more optical transmission elements 410.

Referring to Fig. 2, the core may comprise one or more optical fiber ribbon bundles 208 in accordance with an alternative embodiment. In particular, the optical fiber ribbon bundle is a group of a plurality of optical fiber ribbons arranged/grouped together using one or more binders. Thus, multiple individual optical fiber ribbons are stacked or grouped into a bundle to form the optical fiber ribbon bundle. Moreover, optical fiber ribbon includes a plurality of optical fibers arranged together using a matrix material. Further, the optical fiber ribbon is formed by intermittently or continuously bonding the plurality of optical fibers with the matrix material that imparts a bending and rolling capability along a width of the optical fiber ribbon.

In an embodiment, the buffer tube is used in an optical fiber cable to provide mechanical isolation and protection to the optical transmission elements from physical damages. Particularly, one or more buffer tubes 308, 408 may be made up of, but not limited to, PBT (polybutylene terephthalate), polypropylene (PP), polyamide, thermoplastic material or a combination of any of suitable material.

Thus, in various embodiments, one or more optical transmission elements 210, 310, 410 are encapsulated in one or more buffer tubes 308, 408 (as shown in FIG. 3 and FIG. 4) or one or more binders 208 (as shown FIG. 2) to form the core.

In accordance with an embodiment of the present disclosure, the core is surrounded by the first layer 206, 306, 406. In particular, the first layer 206, 306, 406 is composed of water blocking tape (WBT), aramid yarns, glass roving yarns, water-swellable yarns, or any other suitable material. Moreover, the first layer 206, 306, 406 is surrounded by the sheath 204, 304, 404. Further, sheathing (extrusion) is done at a high temperature (preferably more than 100°C).

In accordance with an embodiment of the present disclosure, the sheathing material for the sheath 204, 304, 404 may include, but not limited to, polyvinylchloride, polyethene (such as High-Density Poly Ethylene (HDPE), Medium Density Poly Ethylene, and Low-Density Poly Ethylene), polyurethane, thermoplastic rubber/elastomer, thermoplastic chlorinated polyethylene, Low Smoke Zero Halogen (LSZH) or combination thereof.

In accordance with an embodiment of the present disclosure, the sheath 204, 304, 404 comprises a plurality of strength members 202, 302, 402 embedded in it. Each of the plurality of strength members 202, 302, 402 further includes the plurality of reinforced yarns and one or more layers of the epoxy resin over the plurality of reinforced yarns. Moreover, one or more layers of the epoxy resin are the blends of the epoxy resin and at least one of sand crystals and silicon dioxide powder. Thus, one or more layers of the epoxy resin form the outermost layer over the plurality of reinforcing yarns which are the blend of the epoxy resin and the powdered material.

In accordance with an embodiment of the present disclosure, one or more layers of the epoxy resin have a modified surface such that a strength member friction coefficient is between 0.3 to 0.5. In particular, the strength member friction coefficient is measured between a surface of the sheath 204, 304, 404 of the optical fiber cable 200, 300, 400 and the modified surface of one or more layers of the epoxy resin. Moreover, to measure friction coefficient (or the coefficient of friction) (CoF), a strength member is placed above a sheath material sample mounted straight on a clamping device and the clamping device is lifted gradually from one end while a second end is fixed. Further, an angle $\alpha$ with the horizontal at which the strength member starts to slide against the surface of the sheath is measured. The coefficient of friction is calculated as:

$$CoF = \tan(\alpha).$$

In accordance with an embodiment of the present disclosure, one or more ripcords 212, 312, 412 are placed in the sheath 204, 304, 404 or between the first layer 206, 306, 406 and the sheath 204, 304, 404 for easy stripping of the sheath 204, 304, 404 and to provide easy access to the core.

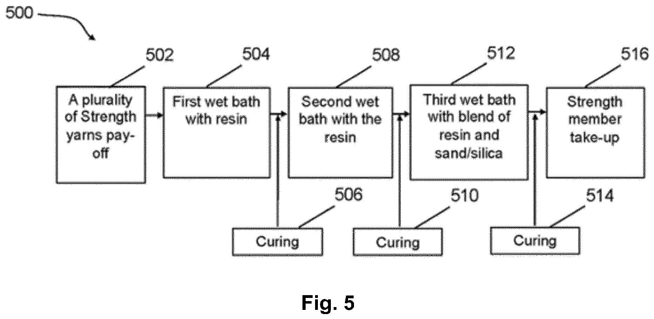

FIG. 5 is a flow chart 500 illustrating a method for manufacturing the strength member in accordance with an embodiment of the present disclosure.

At step 502, the pay-off unit 102 continuously pay-off the plurality of strength yarns to the coating and curing unit 104. In particular, the coating and curing unit 104 performs coating of the plurality of strength yarns with one or more layers of the epoxy resin. Moreover, the outermost coating layer is the blend of the epoxy resin and the powdered material

The coating and curing unit 104 is configured to perform coating and curing of the plurality of strength yarns from step 504 to step 514.

At step 504, the plurality of strength yarns are subjected to wet bathing with the epoxy resin

At step 506, curing is performed by coating and curing unit 104 on the wet bathed plurality of strength yarns.

At step 508 and at step 510, after the first round of bathing and curing the coating and curing unit 104 performs a second round of wet bathing using the epoxy resin and curing of the plurality of strength yarns respectively.

Steps 504 to 510 form the plurality of reinforced yarns.

At step 512 and at step 514, the coating and curing unit 104 performs curing followed by wet bathing of the plurality of reinforced yarns with the blend of the epoxy resin and the powdered material. Particularly, the powdered material results in the modified surface of the strength member such that the strength member's coefficient of friction ranges between 0.3 to 0.5 as measured between the surface of the sheath of the optical fiber cable and the surface of the cured coating layer.

At step 516, the coated and cured strength member is taken up by the take-up unit 106.

The various actions act, blocks, steps, or the like in the flow chart 500 may be performed in the order presented, in a different order or simultaneously. Further, in some implementations, some of the actions, acts, blocks, steps, or the like may be omitted, added, modified, skipped, or the like without departing from the scope of the present disclosure.

While several possible embodiments of the disclosure have been described above and illustrated in some cases, it should be interpreted and understood as to have been presented only by way of illustration and example, but not by limitation. Thus, the breadth and scope of a preferred embodiment should not be limited by any of the above-described exemplary embodiments.

It will be apparent to those skilled in the art that other embodiments of the disclosure will be apparent to those skilled in the art from consideration of the specification and practice of the disclosure. While the foregoing written description of the disclosure enables one of ordinary skill to make and use what is considered presently to be the best mode thereof, those of ordinary skill will understand and appreciate the existence of variations, combinations, and equivalents of the specific embodiment, method, and examples herein. The disclosure should therefore not be limited by the above described embodiment, method, and examples, but by all embodiments and methods within the scope of the disclosure. It is intended that the specification and examples be considered as exemplary, with the true scope of the disclosure being indicated by the claims.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

The foregoing descriptions are merely specific implementations of the present disclosure but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

**Claims**

1. A strength member (202, 302, 402) for use in an optical fiber cable (200, 300, 400) **characterized in that**:

   a plurality of reinforced yarns; and
   one or more layers of epoxy resin over the plurality of reinforced yarns, wherein the one or more layers of epoxy resin have a modified surface such that a strength member friction coefficient is between 0.3 to 0.5.

2. The strength member (202, 302, 402) as claimed in claim 1, wherein the strength member friction coefficient is measured between a surface of a sheath (204, 304, 404) of the optical fiber cable (200, 300, 400) and the modified surface of the one or more layers of epoxy resin.

3. The strength member (202, 302, 402) as claimed in claim 1, wherein the plurality of reinforced yarns comprising:

   a plurality of strength yarns extended longitudinally; and
   one or more cured coating layers of epoxy resin reinforcing the plurality of strength yarns.

4. The strength member (202, 302, 402) as claimed in claim 3, wherein the plurality of strength yarns is anyone of aramid yarns, glass yarns.

5. The strength member (202, 302, 402) as claimed in claim 1, wherein the one or more layers of epoxy resin are blended with at least one of sand crystals and silicon dioxide powder.

6. The strength member (202, 302, 402) as claimed in claim 5, wherein the sand crystals have a largest dimension less than 700 microns and the silicon dioxide powder has a largest dimension less than 300 microns.

7. The strength member (202, 302, 402) as claimed in claim 5, wherein a concentration of the sand crystals or the silicon dioxide powder in the one or more layers of epoxy resin is 50 to 100 phr (Parts per Hundred Resin).

8. The strength member (202, 302, 402) as claimed in claim 1, wherein the one or more layers of epoxy resin are cured using ultraviolet curing or thermal curing.

9. A method of manufacturing a strength member (202, 302, 402) for an optical fiber cable (200, 300, 400), **characterized in that** steps of:

   coating a plurality of strength yarns with one or more layers of epoxy resin; and
   curing of the one or more layers of epoxy resin,

   wherein an outermost layer of the one or more layers of epoxy resin has a modified surface such that a strength member friction coefficient is between 0.3 to 0.5.

10. The method as claimed in claim 9, wherein the strength member friction coefficient is measured between a surface of a sheath (204, 304, 404) of the optical fiber cable (200, 300, 400) and the modified surface of the one or more layers of epoxy resin.

11. The method as claimed in claim 9, wherein the plurality of strength yarns is one of aramid yarns, glass yarns.

12. The method as claimed in claim 9, wherein the outermost layer of the one or more layers of epoxy resin is blended with at least one of sand crystals and silicon dioxide powder.

13. The method as claimed in claim 12, wherein the sand crystals have a largest dimension less than 700 microns and the silicon dioxide powder has a largest dimension less than 300 microns.

14. The method as claimed in claim 12, wherein concentration of the sand crystals or the silicon dioxide powder in the one or more layers of epoxy resin is 50 to 100 phr (Parts per Hundred Resin).

15. The method as claimed in claim 9, wherein the one or more layers of epoxy resin are cured using ultraviolet curing or thermal curing.

100

| Pay-off Unit 102 | → | Coating and curing unit 104 | → | Take-up unit 106 |

**Fig. 1**

**Fig. 2**

**Fig. 3**

**Fig. 4**

500

502      504      508      512      516

| A plurality of Strength yarns pay-off | First wet bath with resin | Second wet bath with the resin | Third wet bath with blend of resin and sand/silica | Strength member take-up |
|---|---|---|---|---|

506      510      514

| Curing | | Curing | | Curing |
|---|---|---|---|---|

**Fig. 5**

Europäisches
Patentamt

European
Patent Office

Office européen
des brevets

## EUROPEAN SEARCH REPORT

Application Number

EP 22 21 6293

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 050 957 A (HAMILTON ALFRED S [US] ET AL) 24 September 1991 (1991-09-24)<br>* column 3, lines 56-58 *<br>* column 4, lines 17-18 *<br>* column 6, lines 39-43 *<br>* column 7, lines 16-23 *<br>* figure 1 *<br>----- | 1-15 | INV.<br>G02B6/44 |
| A | EP 0 373 846 A2 (AMERICAN TELEPHONE & TELEGRAPH [US]) 20 June 1990 (1990-06-20)<br>* column 6, lines 41-45 *<br>* column 7, lines 37-52 *<br>* column 8, lines 7-9 *<br>* column 8, lines 38-46 *<br>* figures 1-2 *<br>----- | 1-15 | |

TECHNICAL FIELDS
SEARCHED        (IPC)

G02B

The present search report has been drawn up for all claims

| Place of search | Date of completion of the search | Examiner |
|---|---|---|
| The Hague | 17 April 2023 | Pantelakis, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 6293

This annex lists the patent family members relating to the patent documents cited in the above-mentioned European search report.
The members are as contained in the European Patent Office EDP file on
The European Patent Office is in no way liable for these particulars which are merely given for the purpose of information.

17-04-2023

| Patent document cited in search report | | Publication date | Patent family member(s) | | | Publication date |
|---|---|---|---|---|---|---|
| US 5050957 | A | 24-09-1991 | CA | 2040973 | C | 07-03-1995 |
| | | | EP | 0454433 | A2 | 30-10-1991 |
| | | | JP | H04226408 | A | 17-08-1992 |
| | | | KR | 910018821 | A | 30-11-1991 |
| | | | TW | 209893 | B | 21-07-1993 |
| | | | US | 5050957 | A | 24-09-1991 |
| EP 0373846 | A2 | 20-06-1990 | CA | 2005114 | A1 | 14-06-1990 |
| | | | CN | 1043793 | A | 11-07-1990 |
| | | | DE | 68915969 | T2 | 22-09-1994 |
| | | | DK | 629289 | A | 15-06-1990 |
| | | | EP | 0373846 | A2 | 20-06-1990 |
| | | | KR | 900010434 | A | 07-07-1990 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202111061170
- WO 2016148895 A1
- EP 1066224 B1
- CA 2587364 C